Europäisches Patentamt

European Patent Office

Office européen des brevets

(11) Publication number: **0 496 890 A1**

# EUROPEAN PATENT APPLICATION
## published in accordance with Art. 158(3) EPC

(21) Application number: 91913825.5

(22) Date of filing: **06.08.91**

(86) International application number:
**PCT/JP91/01049**

(87) International publication number:
**WO 92/02798 (20.02.92 92/05)**

(51) Int. Cl.5: **G01L 9/08**

(30) Priority: **07.08.90 JP 208950/90**

(43) Date of publication of application:
**05.08.92 Bulletin 92/32**

(84) Designated Contracting States:
**DE FR GB IT NL**

(71) Applicant: **SEIKO EPSON CORPORATION**
**4-1, Nishishinjuku 2-chome**
**Shinjuku-ku Tokyo 163(JP)**

(72) Inventor: **TAKENAKA, Kazuhiro**
**3-5, Owa 3-chome**
**Suwa-shi, Nagano-ken 392(JP)**

(74) Representative: **Bosotti, Luciano et al**
**c/o Jacobacci-Casetta & Perani S.p.A. Via**
**Alfieri, 17**
**I-10121 Torino(IT)**

(54) **PRESSURE SENSOR.**

(57) A pressure sensor for converting a pressure into an electric signal, in which an Si membrane is formed on an Si substrate and a capacitor comprising a piezoelectric thin film is formed on the Si membrane. Further, any element of a resistor, diode and transistor are formed on the main surface of the Si substrate, and the output given from the capacitor is processed by the element on the Si substrate.

Fig. 1 (a)

1       **EP 0 496 890 A1**       2

## FIELD OF THE INVENTION

The present invention relates to a high precision pressure sensor for converting pressure into an electric signal formed such that the thickness of at least a part of a Si substrate (hereinafter, refer to a Si membrane) is made thinner than that of another part thereof, that, on the Si membrane a capacitor formed by a piezoelectric film is formed, that on the principal surface of the substrate at least any one of the elements such as a resistor, a diode and a transistor are formed, and that by using them, an output from the capacitor is processed on the Si substrate.

## BACKGROUND OF THE INVENTION

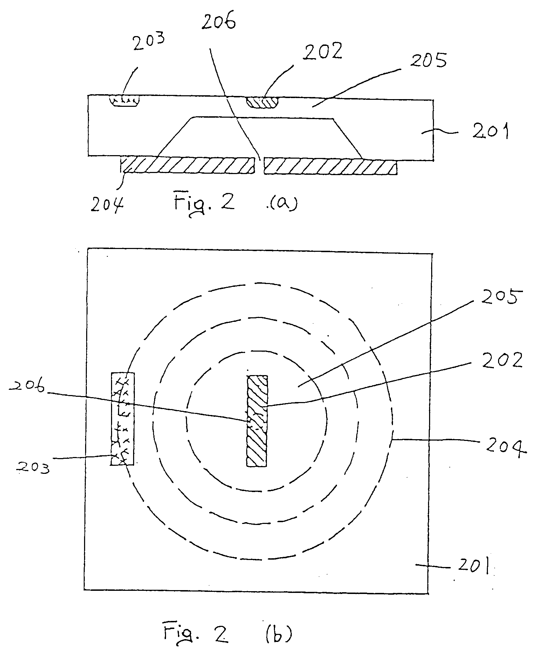

As the conventional pressure sensor which uses a Si membrane like that of the present invention, such a pressure sensor has been proposed that, as shown in Fig. 2, a Si membrane (205) is formed on a Si substrate with its partial thickness being made thin, and that in the Si membrane a diffusion resistance (202) having an opposite conductivity to that of the Si substrate (201) is formed. A reference numeral (204) is a plate which defines a pressure detecting port, and (206) the pressure detecting port.

However, the conventional pressure sensor is based on the principle that it detects a change of the diffusion resistance generated in the Si membrane by utilizing the flexure of the Si membrane caused by a pressure difference applied thereon. Therefore, the change is too small (for example, less than 1 % per 1 atmospheric pressure), and precise pressure detection was impossible. Further, because of the amount of change being too small, it has been necessary for providing a standard resistance (303) in the thick part of the Si substrate, and detecting the difference between the standard resistance and the resistance formed in the Si membrane by using a bridge circuit or the like.

The present invention is to solve the aforementioned problems of the conventional pressure sensor, and an object of the present invention is to provide a pressure sensor which can output a large output voltage and has a precise detecting capacity.

## DISCLOSURE OF THE INVENTION

A pressure sensor for converting pressure into an electric signal according to the present invention is characterized in that a Si membrane is formed on a Si substrate, a capacitor composed of a piezoelectric film being formed on the Si membrane, and at least any one of elements such as a resistor, a diode and transistor being formed on the main surface of the Si substrate, and that an output of the capacitor is processed on the Si by these elements.

## BRIEF DESCRIPTION OF THE DRAWINGS

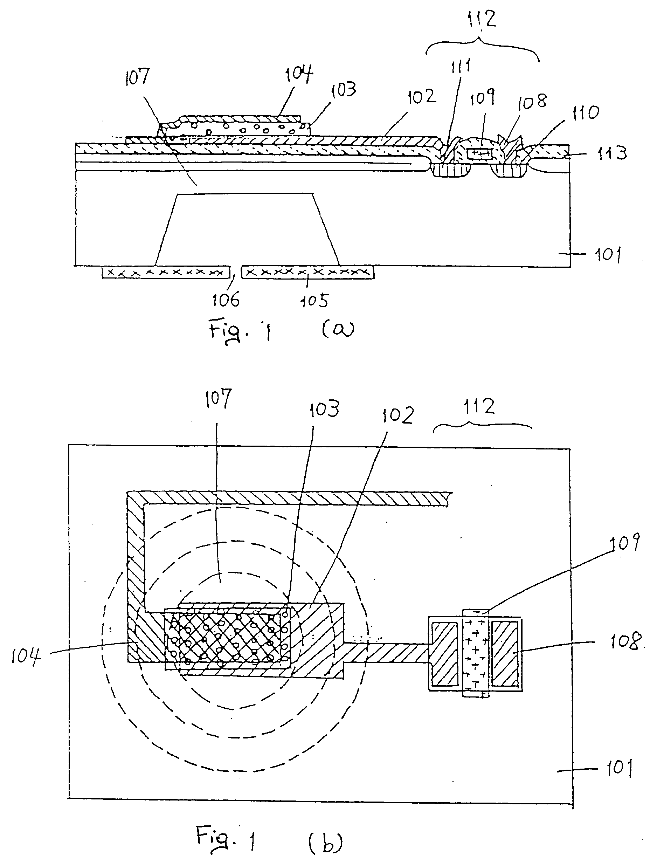

Fig. 1(a) is a main sectional view of the present invention; Fig. 1(b) is a main plan view of the present invention; Fig. 2(a) is a main sectional view of a conventional pressure sensor; and Fig. 2(b) is a main plan view of the conventional pressure sensor.

## BEST MODE FOR CARRYING OUT THE INVENTION

Fig. 1(a) is a main sectional view of one of the embodiments of the pressure sensor according to the present invention, and Fig. 1(b) is a plan view of the embodiment. Hereinafter, by referring to the accompanying drawings, the present invention will be described.

A reference numeral (101) is a Si substrate and its thickness is, for example, 600 $\mu$m. A reference numeral (107) indicates a Si membrane formed at the Si substrate which is formed, for example, by etching the substrate so as to have its thickness of 10 $\mu$m. A reference numeral (103) is a piezoelectric film as an element of the present invention, which is formed, for example, by PZT with its thickness of 1 $\mu$m. As other materials of piezoelectric films, there are PLZT, $PbTiO_3$, etc. A reference numeral (102) is a lower electrode formed, for example, by AIW to have a thickness of 1 $\mu$m. (104) is an upper electrode which is formed by Al to have a thickness of 1 $\mu$m. These electrodes and piezoelectric films are obtained by forming films with the use of a sputtering process and forming a predetermined pattern by using the exposing technology. Thus, a capacitor having the piezoelectric film is constructed by (102), (103) and (104). A reference numeral (105) is a plate defining a pressure detecting port (106) and is, for example, a Cu plate.

A reference numeral (112) indicates a transistor formed on one and the same Si substrate, and here, it is a MOS-type transistor. A reference numeral (109) indicates a gate electrode, (110) and (111) diffusion layers of the source and drain electrodes, respectively. The transistor and the capacitor composed of the piezoelectric film are connected by the lower electrode (102) which is used here as a wiring member. The upper electrode (104) can be also used as a wiring electrode (not shown).

According to the pressure sensor having the structure shown in Fig. 1, an output of the capacitor composed of the piezoelectric film on the Si membrane is detected by utilizing flexure of the Si membrane caused by pressure difference applied thereon, and the output of the capacitor is processed by the transistor and elements (for example, an operational amplifier constructed by transistors) which are directly formed on the same Si substrate, thereby obtaining a large output voltage (output of the operational amplifier 900 mV at 1 atmospheric pressure). Further, since a processing circuit is provided on one and the same Si substrate, such an excellent pressure sensor is obtained that it is free from erroneous operation and not disturbed in precision by noise. Further, there is no necessity of arranging a diffusion resistance for comparison which has been necessary for those of conventional ones. In addition, since the output voltage can be controlled by the gain of the circuit integrated on the Si substrate, when a large output voltage is required, it is easily obtained by increasing the gain of the circuit integrated on the Si substrate. As described above, any desired output voltage can be freely obtained.

Although illustration has been made to cases in which the MOS-type transistors are integrated by referring to Fig. 1, a diode, a bipolar transistor, etc. can be integrated as required. Further, since the method for manufacturing the semiconductor can be applied to the forming of electrodes and piezoelectric films, the present invention is suitable for mass production.

## INDUSTRIAL AVAILABILITY

The pressure sensor for converting pressure into an electric signal of the present invention is constructed such that the Si membrane is formed on the Si substrate, the capacitor composed of piezoelectric film being formed on the Si membrane, and, on the main surface of the Si substrate at least any one of the following elements of a resistor, a diode and a transistor being formed, and that the output from the capacitor is processed on Si, so that the pressure sensor according to the present invention can output a large output voltage and improve precision in detecting.

## Claims

1. A pressure sensor for converting pressure into an electric signal characterized in that; at least a part of a Si substrate is thinner than another part of said Si substrate, on the main surface of said thinner part of the Si substrate a capacitor composed of a piezoelectric film being formed, and on the main surface of said Si substrate at least any one of the elements of a resistor, a diode and a transistor being formed, wherein any of said elements is connected with said capacitor on said Si substrate.

112

107    104    103    102    111    109    108    110

113

101

106    105

Fig. 1    (a)

107    103    102    112

109

104    108

101

Fig. 1    (b)

4

Fig. 2 .(a)

Fig. 2 (b)

# INTERNATIONAL SEARCH REPORT

International Application No PCT/JP91/01049

**I. CLASSIFICATION OF SUBJECT MATTER** (if several classification symbols apply, indicate all) 6

According to International Patent Classification (IPC) or to both National Classification and IPC

Int. Cl⁵  G01L9/08

**II. FIELDS SEARCHED**

| Minimum Documentation Searched 7 | |
|---|---|
| Classification System | Classification Symbols |
| IPC | G01L9/00-9/08, G01L13/00-13/06, G01L23/00-23/24 |

Documentation Searched other than Minimum Documentation
to the Extent that such Documents are Included in the Fields Searched 8

Jitsuyo Shinan Koho      1926 - 1990
Kokai Jitsuyo Shinan Koho   1971 - 1990

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 58-182285 (Honeywell Inc.), October 25, 1983 (25. 10. 83) & GB, B2, 2,119,098 & DE, A1, 3,311,128 & US, A, 4,445,384 & US, A, 4,531,267 | 1 |
| Y | JP, A, 53-114690 (Yokogawa Electric Corp.), October 6, 1978 (06. 10. 78), (Family: none) | 1 |
| Y | JP, A, 59-31404 (Hitachi, Ltd.), February 20, 1984 (20. 02. 84) & EP, A1, 106,050 & US, A, 4,556,807 | 1 |
| Y | JP, A, 62-151733 (AVL Gesellschoft für Verbrennungskraftmaschinen und MeBtechnik m.b.H. Prof. Dr. Dr. h. c. Hans List), July 6, 1987 (06. 07. 87), (Family: none) | 1 |
| Y | JP, A, 48-90489 (Nippon Telegraph & Telephone Public Corp.), November 26, 1973 (26. 11. 73), (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 27, 1991 (27. 09. 91) | October 14, 1991 (14. 10. 91) |
| International Searching Authority | Signature of Authorized Officer |
| Japanese Patent Office | |

Form PCT/ISA/210 (second sheet) (January 1985)